# FASCICULE DE BREVET EUROPEEN

(11) **EP 3 011 799 B1**
(45) Date de publication et mention de la délivrance du brevet: **07.08.2019**
(21) Numéro de dépôt: 14739884.6
(22) Date de dépôt: 17.06.2014
(51) Int. Cl.: H04W 24/02, H04W 88/08

(54) **DISPOSITIFS DE FOURNITURE D'INFORMATIONS DE SERVICE POUR UNE LIAISON PAR FAISCEAU MICROONDES**
VORRICHTUNGEN ZUR LIEFERUNG VON DIENSTINFORMATIONEN FÜR EINE RICHTFUNKVERBINDUNG
DEVICES FOR SUPPLYING SERVICE INFORMATION FOR A MICROWAVE LINK

(30) Priorité: 19.06.2013 FR 1355774
(43) Date de publication de la demande: 27.04.2016
(73) Titulaire: Orange, 75015 Paris (FR)
(72) Inventeur: CHANCLOU, Philippe, F-22300 Lannion (FR); PIZZINAT, Anna, F-91370 Verrières le Buisson (FR)
(86) Numéro de dépôt international: PCT/FR2014/051500
(87) Numéro de publication internationale: WO 2014/202896

(56) Documents cités:
- EP-A1- 2 493 260
- EP-A1- 2 493 260
- WO-A2-2008/092069
- CN-A- 102 118 191
- US-A1- 2008 069 032
- "CPRI Specification V5.0 - Common Public Radio Interface (CPRI); Interface Specification; extrait, pages 1-4, 28-57", , 21 septembre 2011 (2011-09-21), XP055033500, Extrait de l'Internet: URL:http://www.cpri.info/downloads/CPRI_v_ 5_0_2011-09-21.pdf [extrait le 2012-07-20] cité dans la demande
- GHEBRETENSAE Z ET AL: "Transmission solutions and architectures for heterogeneous networks built as C-RANs", COMMUNICATIONS AND NETWORKING IN CHINA (CHINACOM), 2012 7TH INTERNATIONAL ICST CONFERENCE ON, IEEE, 8 August 2012 (2012-08-08), pages 748-752, XP032425056, DOI: 10.1109/CHINACOM.2012.6417583 ISBN: 978-1-4673-2698-8

## Description

La présente invention concerne les communications numériques, dans le cas où le signal de données est véhiculé dans un faisceau microondes, noté ci-après faisceau MW (initiales des mots anglais « *MicroWave* »).

L'invention concerne plus particulièrement les communications radio, notamment selon la norme CPRI (initiales des mots anglais *« Common Public Radio Interface* » signifiant « Interface Radio Publique Commune»). La norme CPRI a été introduite par un groupe de travail constitué de fabricants d'équipements pour réseaux mobiles (cf. le site Web www.cpri.info). Cette norme a été réexaminée par le groupe ORI (initiales des mots anglais « *Open Radio Interface* » signifiant « Interface de Radio Ouverte ») de l'ETSI (*European Telecommunications Standards Institute),* qui cherche à mettre au point une norme entièrement interopérable en relation avec les normes ITU-T SG15 Q2, ITU-T SG15 Q6 et IEEE 802.3, ces trois normes définissant des technologies dites WDM-PON (initiales des mots anglais « *Wavelength Division Multiplexing Passive Optical Network* » signifiant « Réseau Optique Passif à Multiplexage par Division en Longueur d'Onde »). Les débits de données qui seront transportées conformément à la norme CPRI seront très élevés (à partir de 600 Mbit/s, et jusqu'à plusieurs Gbit/s).

Il est notamment envisagé d'utiliser des signaux CPRI pour le « *fronthaul* » (liaison issue du coeur de réseau et allant vers une cellule radio sur le dernier kilomètre). Les liaisons pourront, par exemple, utiliser la fibre optique comme support de transmission des signaux CPRI (cette technologie porte le nom de DRoF, initiales des mots anglais « *Digital Radio over Fiber»* signifiant « Radio Numérique sur Fibre »). Mais ces liaisons pourront également utiliser des faisceaux MW comme support de transmission des signaux CPRI (nous donnerons ci-après à cette technologie le nom de DRoM, initiales des mots anglais « *Digital Radio over Microwave* » signifiant « Radio Numérique sur faisceau Microondes »).

Par exemple, la demande de brevet WO-2008092069 divulgue un système de station de base distribuée pour la transmission de données à haute vitesse entre une passerelle IP et au moins une antenne distante ; ce système comprend une station de base connectée à la passerelle Internet, et un convertisseur RF (Radio Fréquences) distant connecté à l'antenne ; la station de base et le convertisseur RF échangent des données via un canal de transport qui peut, notamment, être un lien radio millimétrique (par exemple dans la « bande E » à 70 GHz) ou un lien microondes.

De même, l'article de Ghebretensaé et al. intitulé « Transmission Solutions and Architectures for Heterogeneous Networks Built as CRANs » soumis à la 7ème conférence ICST « Communications and Networking », 8 au 10 août 2012, décrit (cf. notamment la Section IV-C) l'utilisation de liaisons MW dans la bande E, notamment pour les liaisons « *backhaul* » entre les stations de base radio et les centres de commutation. Cet article recommande l'utilisation de cette technologie pour les communications numériques à haut débit (de l'ordre du Gbps).

Il est donc important de pouvoir disposer de solutions techniques satisfaisantes pour sécuriser et simplifier le fonctionnement, l'administration et l'entretien de ces liaisons MW.

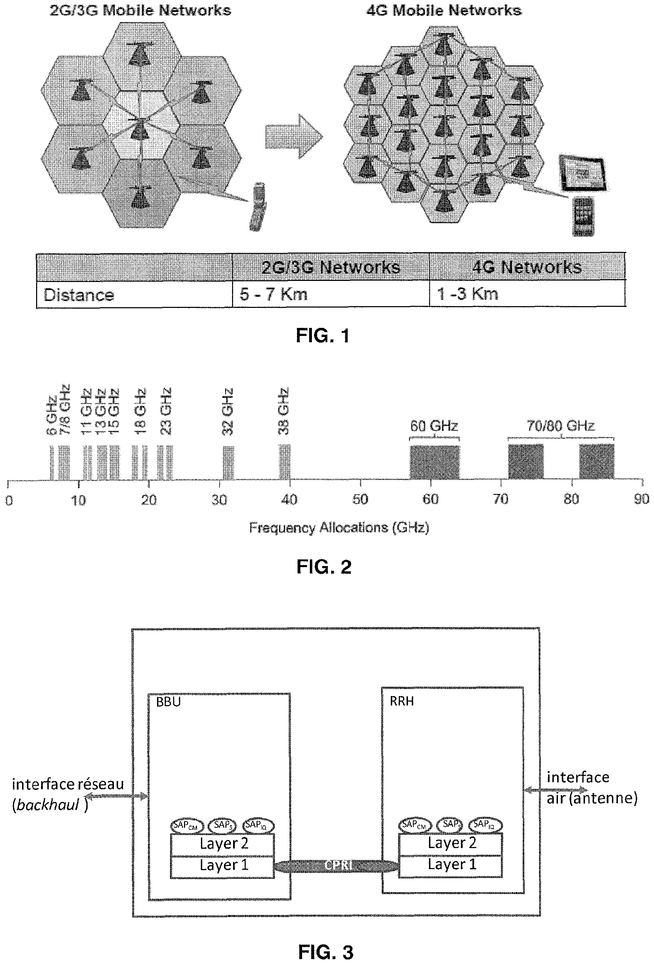

On notera que la technologie MW est particulièrement bien adaptée aux communications en LTE. On rappelle à cet égard que le LTE (initiales des mots anglais « *Long Term Evolution* » signifiant « Évolution sur le Long Terme ») est un ensemble de technologies de télécommunications mobiles, qui sont normalisées dans leur version « avancée » (LTE Advanced) - également appelée « quatrième génération » (4G) - dans le document « Release 10 » du 3GPP (« *Third Generation Partnership Project* »). En effet, comme illustré sur la **figure 1****,** les cellules 4G sont de dimensions (1 à 3 km) plus faibles que les cellules 2G (GSM) ou 3G (UMTS) (5 à 7 km), et ces distances plus courtes conviennent bien au transport de données par faisceau MW.

Dans le cas des réseaux LTE, ainsi que des réseaux de « petites cellules » (« small » ou « micro » par exemple), le mode de transport MW peut, de ce fait, être préféré au transport par fibre optique, notamment en raison du coût relativement élevé du déploiement d'un réseau de fibres optiques.

Plusieurs bandes de fréquences peuvent être utilisées pour la transmission des signaux DRoM, comme illustré sur la **figure 2** dans le cas des normes Européennes. Les fréquences inférieures à 38 GHz sont difficilement compatibles avec les signaux CPRI, car elles sont très utilisées pour différentes applications et risquent d'être congestionnées. Seules les bandes de fréquences autour de 40GHz, 60 GHz et 70/80GHz présentent des canaux assez larges pour offrir des débits de l'ordre du Gbit/s ou plus sur des distances dépassant la centaine de mètres. En particulier la bande de fréquences appelée « bande E », mentionnée ci-dessus, qui est constituée de deux canaux d'une largeur de 5 GHz, à savoir entre 71 et 76 GHz, et entre 81 et 86 GHz, est très prometteuse pour le transport des signaux CPRI ; on peut en effet y transporter des débits de l'ordre de 2,5 Gbit/s avec des modulations simples ; de plus, l'atténuation due à l'absorption atmosphérique y est de l'ordre de 0,5 dB/km (alors qu'elle est de l'ordre de 15 dB/km à 60 GHz), ce qui permet, dans de bonnes conditions météorologiques, d'atteindre des distances de quelques kilomètres (on notera à cet égard que la qualité des liaisons MW baisse sensiblement en cas de pluie).

On rappelle que le gain et la directivité d'une antenne augmentent avec la fréquence. Par conséquent, des antennes émettant en bande E présentent naturellement un gain et une directivité plus élevés que les antennes de mêmes dimensions aux fréquences classiques (inférieures à 40 GHz). On peut donc réaliser facilement des faisceaux de section étroite (appelés « *pencil beams* » en anglais) dans les transmissions en bande E, mais cela impose des conditions plus strictes qu'aux fréquences classiques en ce qui concerne la précision du pointage du faisceau MW entre le transmetteur et le récepteur.

Une station de base classique conforme à la norme CPRI comprend une RRH (initiales des mots anglais « *Remote Radio Head »* signifiant « Tête Radio Eloignée »), également appelée RE (initiales des mots anglais « *Radio Equipment* » signifiant « Equipement Radio »), et une BBU (initiales des mots anglais « *Base Band Unit»* signifiant « Unité de Bande de Base »), également appelée REC (initiales des mots anglais « *Radio Equipment Controller* » signifiant «Contrôleur d'Equipement Radio »), connectées par un câble optique ou un faisceau MW, et communiquant par signaux CPRI.

On rappelle (cf. l'encyclopédie en ligne Wikipedia) que le sigle RRH désigne un système de contrôle géré par un opérateur radio et qui communique avec un émetteur-récepteur radio *via* une interface électrique ou sans-fil. Les RRH sont devenues l'un des sous-systèmes les plus importants des stations de base actuelles. Dans une station de base, la RRH contient les circuits RF (Radio Fréquences), ainsi que des convertisseurs analogique-numérique et numérique-analogique, et des convertisseurs haut/bas. Les RRH possèdent des capacités de traitement et d'administration des fonctionnalités des stations de base, et facilitent la localisation des zones où la couverture radio est insuffisante.

Les RRH actuelles utilisent la toute dernière technologie de composants RF, y compris les amplificateurs de puissance RF à nitrure de gallium (GaN) et la technologie de suivi d'enveloppe dans l'amplificateur de puissance. Les RRH, qui sont de la taille d'une valise et pèsent environ 15 kg, sont généralement placées au sommet d'une antenne de la station de base.

Les BBU, quant à elles, se présentent généralement sous la forme d'une armoire d'équipements électroniques.

Dans certaines stations de base conformes à la norme CPRI, la RRH et la BBU sont intégrées dans un seul boîtier (stations de base dites « monobloc »). La présente invention concerne en revanche les stations de base dites « distribuées », dans lesquelles la RRH et la BBU sont situées à une certaine distance l'une de l'autre.

Dans certaines stations de base distribuées, la BBU est disposée au bas de l'antenne portant la RRH, et la distance entre la RRH et la BBU y est alors de quelques mètres. On peut alors commodément utiliser une fibre optique ou un faisceau MW pour connecter la RRH à la BBU.

Dans les stations de base distribuées adaptées aux techniques de communication sans-fil telles que GSM, WiMAX, UMTS ou LTE, la BBU peut être située à une distance importante de la RRH, cette distance pouvant par exemple monter jusqu'à quelques dizaines de kilomètres. De tels équipements peuvent être utilisés pour étendre la couverture d'une station de base, par exemple dans les zones rurales ou dans les tunnels. Les BBU appartenant à plusieurs stations de base peuvent alors être co-localisées dans un même « Bureau Central » (« *Central Office* », ou CO, en anglais), d'où le concept « d'hébergement de BBU » (« *BBU hostelling* » en anglais). Cette architecture d'hébergement de BBU soulève un grand intérêt du fait de ses avantages : en effet, elle résout des problèmes de sécurité en LTE, et permet de simplifier le « *backhaul »* (liaison directe avec le coeur de réseau) ; plus précisément, par comparaison avec les autres architectures de backhaul connues, elle est la mieux adaptée pour mettre en oeuvre les évolutions de la technologie LTE-Advanced, et permet en outre de faire des économies (énergie, déploiement, et ainsi de suite). C'est pourquoi plusieurs opérateurs réseau ont déjà commencé à déployer une architecture d'hébergement de BBU.

Plusieurs liaisons point-à-point sont utilisées pour transporter le trafic CPRI. Il faut généralement mettre en place une liaison MW par RRH ; par exemple, une station de communications mobiles munie d'une antenne à trois secteurs requiert trois liaisons MW.

Il est donc nécessaire de superposer plusieurs faisceaux MW (même point de départ, même point d'arrivée), qui peuvent différer par la fréquence du signal MW associé. L'utilisation de la bande E de fréquences, notamment, permet de superposer plusieurs transmissions sans risque d'interférences mutuelles. De plus, un faisceau de fréquence donnée peut véhiculer plusieurs transmissions (bidirectionnelles et/ou multiplexées).

Dans ces conditions, lors de l'installation et de l'utilisation de liaisons MW entre une RRH et une BBU, il faut pouvoir résoudre les problèmes suivants.

Un premier problème est de trouver le « bon » faisceau MW. Autrement dit, il faut pouvoir identifier quelle BBU et/ou RRH est associée à un faisceau MW donné.

Un deuxième problème est de savoir comment, au besoin, se procurer des informations de service telles que : bande de fréquences utilisée, type de modulation, débit de données, puissance d'émission, et ainsi de suite.

Dans l'état de l'art, pour pouvoir identifier les caractéristiques du signal véhiculé dans une liaison MW lors du fonctionnement, de l'administration ou de l'entretien de cette liaison, on doit nécessairement faire intervenir un technicien pour réaliser des tests adéquats : or cette méthode d'identification est évidemment coûteuse en termes de temps passé, et de main d'oeuvre.

La présente invention est capturée dans les revendications, et concerne une unité BBU , « *Base Band Unit* », comprenant des moyens de connexion à une pluralité de têtes microondes et des moyens pour fournir à l'une quelconque de ces têtes microondes un identifiant de cette unité BBU, ou pour recevoir de la part de l'une quelconque de ces têtes microondes un identifiant d'une unité RRH, « *Remote Radio Head* », contenu dans au moins un sous-canal de contrôle prédéterminé d'un signal pour la radio numérique.

La présente invention concerne aussi une unité RRH, « *Remote Radio Head* », comprenant des moyens de connexion à une pluralité de têtes microondes, et des moyens pour fournir à l'une quelconque de ces têtes microondes un identifiant de cette unité RRH, ou pour recevoir de la part de l'une quelconque de ces têtes microondes un identifiant d'une unité BBU, « *Base Band Unit* », contenu dans au moins un sous-canal de contrôle prédéterminé d'un signal pour la radio numérique.

Ainsi, l'invention prévoit l'attribution à une unité BBU (respectivement, RRH) (par un fabricant de cette unité, ou par un opérateur réseau par exemple) d'un identifiant de cette BBU (respectivement, RRH), et l'insertion de cet identifiant dans un faisceau MW issu de ladite BBU (respectivement, RRH) au travers d'une tête MW. Avantageusement, cette insertion est entièrement automatique.

Grâce à ces dispositions, une unité BBU (respectivement, RRH) peut, de manière entièrement automatique, lire dans un signal véhiculé par un faisceau microondes reçu par ladite BBU (respectivement, RRH) au travers d'une tête microondes, un identifiant qui a été attribué à une unité RRH (respectivement, BBU) conformément à l'invention.

Selon des caractéristiques particulières, ladite unité BBU (respectivement, RRH) comprend en outre des moyens pour stocker l'identifiant d'une unité RRH (respectivement, BBU) reçu comme décrit succinctement ci-dessus.

Grâce à ces dispositions, l'unité BBU (respectivement, RRH) peut commodément garder en mémoire ledit identifiant reçu.

L'on permet ainsi en particulier (en combinant ledit premier aspect et ledit deuxième aspect de l'invention) à une BBU et à une RRH appartenant à une même station de base distribuée d'échanger leurs identifiants respectifs, et ce, de manière entièrement automatique. La détermination de l'identifiant d'une unité BBU ou d'une unité RRH est ainsi rendue très aisée.

Dans l'exposé succinct ci-dessus des premiers et deuxième aspects, le mot « prédéterminé » signifie en effet que les unités BBU et RRH savent toutes deux dans quel sous-canal de contrôle insérer, ou lire, ledit identifiant, soit du fait d'une entente préalable entre les gestionnaires de ces unités, soit du fait d'une norme ou d'un usage général appliqué dans l'industrie des signaux pour la radio numérique.

On notera qu'il est possible de réaliser cette unité BBU ou cette unité RRH dans le contexte d'instructions logicielles et/ou dans le contexte de circuits électroniques.

L'invention vise donc également un programme d'ordinateur téléchargeable depuis un réseau de communication et/ou stocké sur un support lisible par ordinateur et/ou exécutable par un microprocesseur. Ledit programme est remarquable en ce qu'il comprend des instructions pour gérer le fonctionnement d'une unité BBU ou d'une unité RRH telles que décrites succinctement ci-dessus, lorsqu'il est exécuté sur un ordinateur.

Les avantages offerts par ce programme d'ordinateur sont essentiellement les mêmes que ceux offerts par lesdites unités.

L'invention exploite ainsi judicieusement les capacités des signaux véhiculés par un faisceau microondes. C'est pourquoi, selon un troisième aspect, l'invention vise également un signal véhiculé par un faisceau microondes. Ledit signal est remarquable en ce qu'il comprend un sous-canal de contrôle prédéterminé (ou plusieurs sous-canaux de contrôle prédéterminés) destiné(s) à contenir un identifiant d'une unité BBU ou d'une unité RRH.

Les caractéristiques du signal selon l'invention pourront avantageusement se combiner avec les caractéristiques définies par la norme CPRI, mais elles pourront également se combiner avec d'autres types de signaux pour la radio numérique.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, décrite ci-dessus, représente schématiquement un réseau cellulaire 2G ou 3G, et un réseau cellulaire 4G,
- la figure 2, décrite ci-dessus, représente une série de bandes de fréquences allouées à divers types de communications radio en Europe,
- la figure 3 représente schématiquement une station de base classique conforme à la norme CPRI,
- la figure 4a représente schématiquement une station de base distribuée selon un premier mode de réalisation de l'invention, et
- la figure 4b représente schématiquement une station de base distribuée selon un deuxième mode de réalisation de l'invention.

Comme expliqué succinctement ci-dessus, l'unité BBU (respectivement, RRH) selon la présente invention comprend des moyens pour fournir à une tête MW connectée à cette unité BBU (respectivement, RRH) un identifiant de cette unité, au sein d'au moins un sous-canal de contrôle prédéterminé d'un signal pour la radio numérique. Corrélativement, l'unité BBU (respectivement, RRH) selon la présente invention comprend des moyens pour recevoir, de la part d'une tête MW à laquelle cette unité BBU (respectivement, RRH) est connectée, un identifiant d'une unité RRH (respectivement, BBU) contenu dans au moins un sous-canal de contrôle prédéterminé d'un signal pour la radio numérique.

Optionnellement, on pourra, de la même manière, produire et transmettre, ou lire dans un sous-canal de contrôle prédéterminé (ou dans plusieurs sous-canaux de contrôle prédéterminés) d'un signal pour la radio numérique envoyé dans un faisceau MW, d'autres informations de service concernant la RRH ou la BBU, telles que :
- le nom du fabricant,
- la configuration matérielle (protections, répéteur, maillage),
- la portée maximum du faisceau MW,
- la précision du pointage du faisceau MW,
- la puissance émise par l'unité émettrice, le seuil de détection de l'unité réceptrice, ainsi que le budget radiofréquences acceptable (c'est-à-dire la différence entre la puissance émise et le seuil de détection),
- la bande de fréquences utilisée,
- le type de modulation,
- le débit de données,
- le délai de latence,
- le type de codage de canal,
- la température,
- un signal d'alarme (par exemple, pour signaler des risques d'intempéries), et/ou
- le fait que l'on met en oeuvre, ou non, la norme CoMP (initiales des mots anglais « *Coordinated Multipoint Transmission* » signifiant « Transmission Multipoint Coordonnée ») (en LTE-Advanced, on peut, conformément à la norme CoMP, coordonner et combiner des signaux associés à plusieurs antennes).

L'invention sera illustrée ci-dessous, à titre d'exemple, dans le cadre de la norme CPRI mentionnée ci-dessus. On va donc, pour commencer, rappeler quelques propriétés de la norme CPRI, et plus particulièrement de la Section 4.2.7.4 dans la version 5.0 de cette norme.

Les données utiles sont véhiculées dans des trames (« *frames* » en anglais), elles-mêmes regroupées dans des « hyper-trames » (« *hyperframes* » en anglais).

Outre les données utiles, chaque hyper-trame contient 256 « mots de contrôle » (« *control words* » en anglais), chaque groupe de 4 mots de contrôle constituant un « sous-canal » (« *subchannel* » en anglais). La norme prévoit en outre, sans autre précision, la possibilité pour un industriel de transmettre des informations propriétaires dans 9 sous-canaux spécifiques, dits sous-canaux « réservés », soit 36 mots de contrôle.

La **figure** 3 représente schématiquement une station de base classique conforme à la norme CPRI.

Cette station de base comprend une BBU, connectée en externe au coeur de réseau (par une liaison dite « *backhaul »* en anglais), et une RRH connectée en externe à une antenne (« *air interface »* en anglais). La BBU et la RRH sont connectées en interne par un câble optique ou un faisceau MW transportant le signal CPRI. Comme expliqué ci-dessus, une telle station peut être monobloc ou distribuée.

Aussi bien dans la BBU que dans la RRH, on distingue :
- une couche physique (*Layer 1*) comprenant les caractéristiques électriques, le type de multiplexage (par exemple, par division dans le temps) des divers flux de données, et la signalisation de bas niveau, et
- une couche de liaison de données (*Layer 2*) comprenant le contrôle d'accès média, le contrôle de flux, et la protection du flux d'informations de contrôle et de gestion.

Plus particulièrement, concernant ladite couche de liaison de données, on définit des points de référence (attachés à des applications logicielles spécifiques) pour les mesures de performance sur chaque lien de communication : ces points sont appelés SAP (initiales des mots anglais « *Service Access Point* » signifiant « Point d'Accès de Service ») ; on distingue notamment le SAP_{CM} pour le contrôle et la gestion, le SAP_{S} pour la synchronisation, et le SAP_{IQ} pour le plan d'usager.

Par ailleurs, selon la norme CPRI, une unité BBU ou RRH est apte à fournir (au moyen desdits SAP, et *via* un lien de service) à une interface CPRI de cette unité un certain nombre d'informations de service au sein d'au moins un sous-canal de contrôle d'un signal CPRI. Corrélativement, selon la norme CPRI, une interface CPRI d'une unité BBU ou RRH permet de fournir à cette unité (au moyen desdits SAP, et *via* un lien de service) un certain nombre d'informations de service contenues dans au moins un sous-canal de contrôle d'un signal CPRI reçu par ledit SFP.

On va décrire à présent, divers modes de réalisation de l'invention.

Dans ces modes de réalisation, ledit identifiant de l'unité BBU (respectivement, RRH) est produit par le point d'accès SAP_{CM} de cette unité BBU (respectivement, RRH). Après réception, ledit identifiant de l'unité RRH (respectivement, BBU) est fourni au point d'accès SAP_{CM} de l'unité BBU (respectivement, RRH).

De plus, l'unité BBU (respectivement, RRH) est apte à stocker ledit identifiant de l'unité RRH (respectivement, BBU).

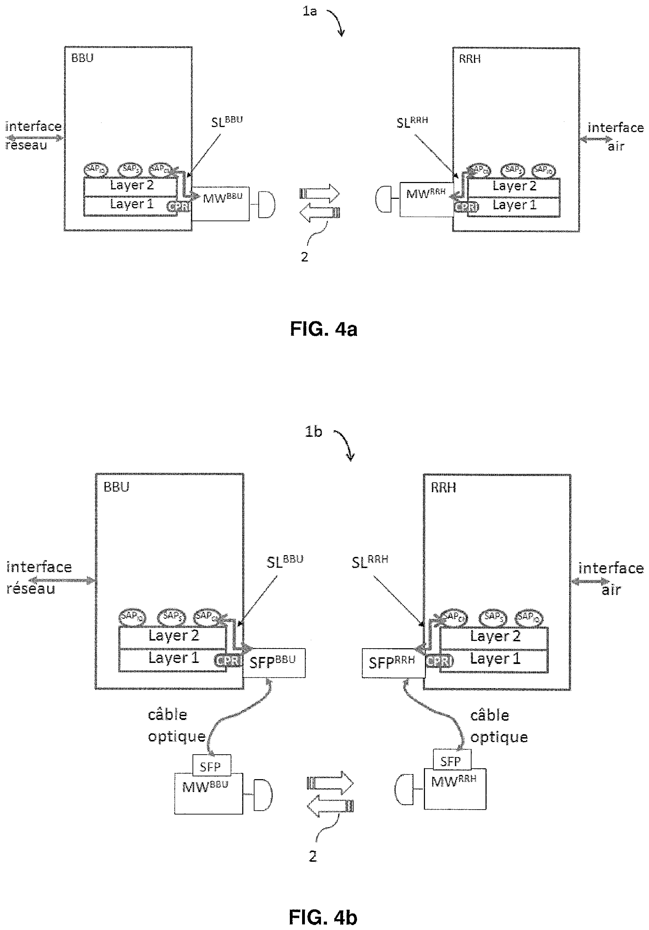

La **figure 4a** illustre un premier mode de réalisation de l'invention.

Cette figure représente schématiquement une station de base distribuée 1a.

La station de base 1a comprend une BBU à laquelle est connectée une tête MW, notée MW^{BBU}. Cette tête MW^{BBU} est connectée au point d'accès SAP_{CM} de cette unité BBU au moyen d'une liaison électrique de service SL^{BBU}.

La station de base 1a comprend également au moins une RRH à laquelle est connectée une tête MW, notée MW^{RRH}. Cette tête MW^{RRH} est connectée au point d'accès SAP_{CM} de cette unité RRH au moyen d'une liaison électrique de service SL^{RRH}.

La tête MW^{BBU} échange avec la tête MW^{RRH} de chaque RRH un signal CPRI véhiculé dans un faisceau MW 2. Dans le cas d'une pluralité de RRH, les faisceaux MW respectifs (pointant donc dans des directions respectives différentes à partir de la BBU) seront de préférence de fréquences différentes entre eux (par exemple, 40 GHz, 60 GHz, et 80 GHz dans le cas de trois faisceaux) ; mais en tout état de cause, l'invention permet avantageusement de savoir quel signal CPRI est véhiculé par un faisceau MW donné.

On va décrire à présent, en référence à la **figure 4b****,** un deuxième mode de réalisation de l'invention.

La figure 4b représente schématiquement une station de base distribuée 1b.

La station de base 1b comprend une BBU à laquelle est connectée une tête MW, notée MW^{BBU}, *via* un câble optique portant un émetteur/récepteur optique SFP à chaque extrémité. Le SFP fixé sur l'interface CPRI de la BBU, noté SFP^{BBU}, est connecté au point d'accès SAP_{CM} de cette unité BBU au moyen d'une liaison électrique de service SL^{BBU}.

La station de base 1b comprend également une RRH à laquelle est connectée une tête MW, notée MW^{RRH}, *via* un câble optique portant un émetteur/récepteur optique SFP à chaque extrémité. Le SFP fixé sur l'interface CPRI de la RRH, noté SFP^{RRH}, est connecté au point d'accès SAP_{CM} de cette unité RRH au moyen d'une liaison électrique de service SL^{RRH}.

On rappelle à cet égard (cf. Wikipedia) qu'un SFP (initiales des mots anglais « *Small Form-Factor Pluggable* » signifiant « Petit Facteur de Forme Enfichable ») est un émetteur-récepteur compact, enfichable « à chaud », qui est utilisé dans les télécommunications. La structure des SFP et des interfaces électriques associées a été spécifiée dans le document INF-8074i présenté au « Comité SFF » (« *Small Form-Factor Committee* ») par une association de fabricants et de distributeurs de composants réseau appelée MSA (initiales des mots anglais « *Multi-Source Agreement »,* signifiant Accord Multi-Source). Le SFP est disposé entre une carte-mère de dispositif réseau (pour un commutateur, un routeur, un convertisseur média ou un dispositif analogue) et un câble réseau en cuivre ou constitué par une fibre optique. Les SFP sont compatibles avec diverses normes de télécommunications, telles que CPRI, mais aussi SONET (initiales des mots anglais « *Synchronous Optical Networking* » signifiant « Réseau Optique Synchrone »), Gigabit Ethernet et Fibre Channel. Les SFP sont disponibles avec une variété de types d'émetteurs et de récepteurs, ce qui permet en particulier, dans le cas des liaisons par fibre optique, de choisir l'émetteur-récepteur approprié pour chaque liaison de manière à fournir la portée optique exigée sur le type de fibre optique disponible (par exemple fibre multi-mode ou fibre monomode).

Notamment, un SFP conforme au document INF-8074i précité est apte, lorsqu'il est connecté à l'interface entre une BBU ou une RRH d'une part, et un câble optique d'autre part :
- à transmettre dans ledit câble optique tout signal CPRI reçu de la part de l'unité BBU ou RRH, et
- à transmettre à l'unité BBU ou RRH tout signal CPRI reçu depuis le câble optique.

Chaque câble optique permet ainsi la transmission bidirectionnelle d'un signal CPRI. De plus :
- l'unité BBU (respectivement, RRH) est apte à fournir au SFP fixé sur l'interface CPRI de ladite unité BBU (respectivement, RRH) un identifiant de cette unité, au sein d'au moins un sous-canal de contrôle prédéterminé d'un signal CPRI, et
- l'unité BBU (respectivement, RRH) est apte à recevoir de la part du SFP fixé sur son interface CPRI un identifiant d'une unité RRH (respectivement, BBU) contenu dans au moins un sous-canal de contrôle prédéterminé dudit signal CPRI.

La tête MW^{BBU} et la tête MW^{RRH} échangent un signal CPRI véhiculé dans un faisceau MW 2, ou plusieurs signaux CPRI véhiculés dans plusieurs faisceaux MW 2 respectifs superposés. On peut aussi envisager de fixer, d'une part, plusieurs SFP sur la BBU, et d'autre part plusieurs SFP respectifs chacun sur une RRH respective, ou sur une RRH munie d'une antenne à plusieurs secteurs, de manière à transmettre plusieurs signaux CPRI respectifs véhiculés dans plusieurs faisceaux MW respectifs entre plusieurs paires de têtes MW respectives.

Dans le cas d'une pluralité de signaux CPRI, les faisceaux MW respectifs seront de préférence de fréquences différentes entre eux ; mais en tout état de cause, l'invention permet avantageusement de savoir quel signal CPRI est véhiculé par un faisceau MW donné.

On notera pour terminer que la présente invention peut être mise en oeuvre au sein de stations de base distribuées (conformes ou non à la norme CPRI), au moyen de composants logiciels et/ou matériels.

Les composants logiciels pourront être intégrés à un programme d'ordinateur classique de gestion d'un tel noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour gérer le fonctionnement d'une unité BBU ou d'une unité RRH selon l'invention.

L'invention vise donc également un programme d'ordinateur téléchargeable depuis un réseau de communication, par exemple un réseau de type Internet, et/ou exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

Ce programme peut être stocké sur un support lisible par ordinateur. L'invention vise donc aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive »* en anglais).

D'autre part, le support d'informations peut être un support transmissible tel qu'un signal électrique ou optique, qui peut être acheminé via un câble électrique ou optique, par radio ou par d'autres moyens. En variante, le support d'informations peut être un circuit intégré dans lequel le programme est incorporé, ce circuit étant adapté pour être utilisé dans la gestion du fonctionnement d'une unité BBU ou d'une unité RRH selon l'invention.

## Revendications

1. Unité BBU, *«Base Band Unit* », **caractérisée en ce qu'**elle comprend des moyens de connexion à une pluralité de têtes microondes (MW^{BBU}), et **en ce qu'**elle comprend des moyens pour fournir à l'une quelconque de ces têtes microondes (MW^{BBU}) un identifiant de cette unité BBU, ou pour recevoir de la part de l'une quelconque de ces têtes microondes (MW^{BBU}) un identifiant d'une unité RRH, « *Remote Radio Head* », contenu dans au moins un sous-canal de contrôle prédéterminé d'un signal pour la radio numérique.

2. Unité BBU selon la revendication 1, dans laquelle ledit identifiant de l'unité BBU est produit par un point d'accès de service dédié au contrôle et à la gestion (SAP_{CM}) de cette unité BBU.

3. Unité BBU, comprenant en outre des moyens pour stocker l'identifiant d'une unité RRH reçu conformément à la revendication 1.

4. Unité BBU, dans laquelle ledit identifiant d'une unité RRH reçu conformément à la revendication 1 est fourni à un point d'accès de service dédié au contrôle et à la gestion (SAP_{CM}) de cette unité BBU.

5. Unité RRH, « *Remote Radio Head* », **caractérisée en ce qu'**elle comprend des moyens de connexion à une pluralité de têtes microondes (MW^{RRH}), et **en ce qu'**elle comprend des moyens pour fournir à l'une quelconque de ces têtes microondes (MW^{RRH}) un identifiant de cette unité RRH, ou pour recevoir de la part de l'une quelconque de ces têtes microondes (MW^{RRH}) un identifiant d'une unité BBU, « *Base Band Unit* », contenu dans au moins un sous-canal de contrôle prédéterminé d'un signal pour la radio numérique.

6. Unité RRH selon la revendication 5, dans laquelle ledit identifiant de l'unité RRH est produit par un point d'accès de service dédié au contrôle et à la gestion (SAP_{CM}) de cette unité RRH.

7. Unité RRH, comprenant en outre des moyens pour stocker l'identifiant d'une unité BBU reçu conformément à la revendication 5.

8. Unité RRH, dans laquelle ledit identifiant d'une unité BBU reçu conformément à la revendication 5 est fourni à un point d'accès de service dédié au contrôle et à la gestion (SAP_{CM}) de cette unité RRH.

9. Moyen de stockage de données inamovible, ou partiellement ou totalement amovible, comportant des instructions de code de programme informatique pour gérer le fonctionnement d'une unité BBU selon l'une quelconque des revendications 1 à 4, ou d'une unité RRH selon l'une quelconque des revendications 5 à 8, lorsque lesdites instructions sont exécutées sur un ordinateur.

10. Programme d'ordinateur téléchargeable depuis un réseau de communication et/ou stocké sur un support lisible par ordinateur et/ou exécutable par un microprocesseur, **caractérisé en ce qu'**il comprend des instructions pour gérer le fonctionnement d'une unité BBU selon l'une quelconque des revendications 1 à 4, ou d'une unité RRH selon l'une quelconque des revendications 5 à 8, lorsqu'il est exécuté sur un ordinateur.

## Patentansprüche

1. BBU-Einheit, "*Base Band Unit*", **dadurch gekennzeichnet, dass** sie Anschlussmittel an eine Vielzahl von Mikrowellenköpfen (MW^{BBU}) umfasst, und dass sie Mittel umfasst, um an irgendeinen dieser Mikrowellenköpfe (MW^{BBU}) einen Identifikator dieser BBU-Einheit zu liefern oder um seitens irgendeines dieser Mikrowellenköpfe (MW^{BBU}) einen Identifikator einer RRH-Einheit, "*Remote Radio Head*", zu empfangen, der in mindestens einem vorbestimmten Unterkanal zur Kontrolle eines Signals für das digitale Radio enthalten ist.

2. BBU-Einheit nach Anspruch 1, bei der der Identifikator der BBU-Einheit von einem Dienstzugangspunkt, der für die Kontrolle und die Verwaltung (SAP_{CM}) dieser BBU-Einheit bestimmt ist, erzeugt wird.

3. BBU-Einheit, ferner umfassend Mittel, um den Identifikator einer RRH-Einheit, der gemäß Anspruch 1 empfangen wird, zu speichern.

4. BBU-Einheit, bei der der Identifikator der RRH-Einheit, der gemäß Anspruch 1 empfangen wird, an einen Dienstzugangspunkt, der für die Kontrolle und die Verwaltung (SAP_{CM}) dieser BBU-Einheit bestimmt ist, geliefert wird.

5. RRH-Einheit, "*Remote Radio Head*", **dadurch gekennzeichnet, dass** sie Anschlussmittel an eine Vielzahl von Mikrowellenköpfen (MW^{RRH}) umfasst, und dass sie Mittel umfasst, um an irgendeinen dieser Mikrowellenköpfe (MW^{RRH}) einen Identifikator dieser RRH-Einheit zu liefern oder um seitens irgendeines dieser Mikrowellenköpfe (MW^{RRH}) einen Identifikator einer BBU-Einheit, "*Base Band Unit*", zu empfangen, der in mindestens einem vorbestimmten Unterkanal zur Kontrolle eines Signals für das digitale Radio enthalten ist.

6. RRH-Einheit nach Anspruch 5, bei der der Identifikator der RRH-Einheit von einem Dienstzugangspunkt, der für die Kontrolle und die Verwaltung (SAP_{CM}) dieser RRH-Einheit bestimmt ist, erzeugt wird.

7. RRH-Einheit, ferner umfassend Mittel, um den Identifikator einer BBU-Einheit, der gemäß Anspruch 5 empfangen wird, zu speichern.

8. RRH-Einheit, bei der der Identifikator der BBU-Einheit, der gemäß Anspruch 5 empfangen wird, an einen Dienstzugangspunkt, der für die Kontrolle und die Verwaltung (SAP_{CM}) dieser RRH-Einheit bestimmt ist, geliefert wird.

9. Nicht entfernbares oder teilweise oder zur Gänze entfernbares Datenspeichermittel, umfassend Informatikprogrammcodeanweisungen für die Verwaltung der Funktion einer BBU-Einheit nach einem der Ansprüche 1 bis 4 oder einer RRH-Einheit nach einem der Ansprüche 5 bis 8, wenn die Anweisungen auf einem Computer ausgeführt werden.

10. Computerprogramm, das von einem Kommunikationsnetz herunterladbar und/oder auf einem von einem Computer lesbaren Träger gespeichert und/oder von einem Mikroprozessor ausführbar ist, **dadurch gekennzeichnet, dass** es Anweisungen für die Verwaltung der Funktion einer BBU-Einheit nach einem der Ansprüche 1 bis 4 oder einer RRH-Einheit nach einem der Ansprüche 5 bis 8 umfasst, wenn es auf einem Computer ausgeführt wird.

## Claims

1. BBU unit, "Base Band Unit", **characterized in that** it comprises means for connecting to a plurality of microwave heads (MW^{BBU}), and **in that** it comprises means for providing any one of these microwave heads (MW^{BBU}) with an identifier of this BBU unit, or for receiving from any one of these microwave heads (MW^{BBU}) an identifier of an RRH unit, "Remote Radio Head", which identifier is contained in at least one predetermined control sub-channel of a signal for digital radio.

2. BBU unit according to Claim 1, in which said identifier of the BBU unit is produced by a service access point dedicated to the control and to the management (SAP_{CM}) of this BBU unit.

3. BBU unit, furthermore comprising means for storing the identifier of an RRH unit, which identifier is received in accordance with Claim 1.

4. BBU unit, in which said identifier of an RRH unit which is received in accordance with Claim 1 is provided to a service access point dedicated to the control and to the management (SAP_{CM}) of this BBU unit.

5. RRH unit, "Remote Radio Head", **characterized in that** it comprises means for connecting to a plurality of microwave heads (MW^{RRH}), and **in that** it comprises means for providing any one of these microwave heads (MW^{RRH}) with an identifier of this RRH unit, or for receiving from any one of these microwave heads (MW^{RRH}) an identifier of a BBU unit, "Base Band Unit", which identifier is contained in at least one predetermined control sub-channel of a signal for digital radio.

6. RRH unit according to Claim 5, in which said identifier of the RRH unit is produced by a service access point dedicated to the control and to the management (SAP_{CM}) of this RRH unit.

7. RRH unit, furthermore comprising means for storing the identifier of a BBU unit, which identifier is received in accordance with Claim 5.

8. RRH unit, in which said identifier of an BBU unit which is received in accordance with Claim 5 is provided to a service access point dedicated to the control and to the management (SAP_{CM}) of this RRH unit.

9. Irremovable, or partially or totally removable means for storing data, comprising computer program code instructions for managing the operation of a BBU unit according to any one of Claims 1 to 4, or an RRH unit according to any one of Claims 5 to 8, when said instructions are executed on a computer.

10. Computer program downloadable from a communication network and/or stored on a medium readable by computer and/or executable by a microprocessor, **characterized in that** it comprises instructions for managing the operation of a BBU unit according to any one of Claims 1 to 4, or an RRH unit according to any one of Claims 5 to 8, when it is executed on a computer.
